(19) Europäisches Patentamt / European Patent Office / Office européen des brevets

(11) **EP 3 460 553 B1**

(12) **EUROPEAN PATENT SPECIFICATION**

(45) Date of publication and mention of the grant of the patent:
**07.02.2024   Bulletin 2024/06**

(21) Application number: **16904605.9**

(22) Date of filing: **08.06.2016**

(51) International Patent Classification (IPC):
**G01S 7/481** (2006.01)      **G02B 7/02** (2021.01)

(52) Cooperative Patent Classification (CPC):
**G01S 7/4812; G01S 7/4818; G02B 7/028**

(86) International application number:
**PCT/JP2016/067053**

(87) International publication number:
**WO 2017/212570 (14.12.2017 Gazette 2017/50)**

(54) **OPTICAL ANTENNA DEVICE**

OPTISCHE ANTENNENVORRICHTUNG

DISPOSITIF FORMANT ANTENNE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2019   Bulletin 2019/13**

(73) Proprietor: **Mitsubishi Electric Corporation Chiyoda-ku Tokyo 100-8310 (JP)**

(72) Inventors:
• **TSUJI, Hidenobu Tokyo 100-8310 (JP)**
• **TAMAGAWA, Yasuhisa Tokyo 100-8310 (JP)**
• **KAMEYAMA, Shumpei Tokyo 100-8310 (JP)**

(74) Representative: **Plasseraud IP 66, rue de la Chaussée d'Antin 75440 Paris Cedex 09 (FR)**

(56) References cited:
WO-A1-99/35526        WO-A1-2012/013491
JP-A- 2005 274 997    JP-A- 2007 094 293
JP-A- 2011 508 541    JP-A- 2014 174 041
US-A1- 2002 114 593   US-A1- 2010 165 492

**Description**

TECHNICAL FIELD

The present invention relates to an optical antenna device for transmitting and/or receiving a laser beam.

BACKGROUND ART

In optical lens systems for use in transmission and reception of laser beams, when temperature changes occur, thermal expansion or contraction of lens arrays or lens holding members such as lens barrels possibly occurs, causing focal lengths or flange backs to change. This possibly causes focusing distances to focusing points of laser beams to change. When this phenomenon occurs, for example, a problem arises where measured values obtained by sensor devices using laser beams change depending on the temperature changes.

In order to address such a problem, for example, Patent Literature 1 (Japanese Patent Application Publication No. 1996-313774) discloses a technique of cancelling out the increase/decrease in the focal length of a plastic collimating lens and linear expansion of a lens barrel when a temperature change occurs.

CITATION LIST

PATENT LITERATURE

Patent Literature 1: Japanese Patent Application Publication No. 1996-313774 (for example, paragraph [0007]).
Patent Literature 2: International Application Publication No. WO 2012/013491 A1.
Patent Literature 3: U.S. Patent Application Publication No. 2010/165492 A1.
Patent Literature 4: International Application Publication No. WO 99/35526 A1.
Patent Literature 5: U.S. Patent Application Publication No. 2002/114593 A1.

SUMMARY OF INVENTION

TECHNICAL PROBLEM

However, even if athermal (temperature compensation) design as disclosed in Patent Literature 1 is made, it is found in some cases that the temperature dependence of optical characteristics of an optical lens system remains beyond an acceptable limit after manufacturing of the optical lens system. In such a case, it is necessary to perform redesign and re-trial production of a lens array and lens holding member, causing a problem where the trial production period and development cost are increased.

In addition, in a case where the outside dimension of an optical lens system is changed by redesign, when the redesigned optical lens system is incorporated in the sensor device, spatial interference between the redesigned optical lens system and other components possibly occurs. In this case, not only the redesign and re-trial production of the optical lens system but also a significant design change of the entire sensor device is required.

In view of the foregoing, an object of the present invention is to provide an optical antenna device which has a structure allowing for improvement in temperature dependence of an optical lens system by a simple and low-cost method.

SOLUTION TO PROBLEM

In accordance with claim 1 of the present invention, there is provided an optical antenna device.

ADVANTAGEOUS EFFECTS OF INVENTION

In accordance with the present invention, the optical antenna device has a structure allowing for improvement in temperature dependence of optical characteristics of the optical lens system by a simple and low cost method.

BRIEF DESCRIPTION OF DRAWINGS

    FIG. 1 is a diagram schematically illustrating an example of an overall configuration of an optical antenna device of a first embodiment according to the present invention.

FIG. 2A is a front view of the optical antenna device of FIG. 1, and FIG. 2B is a rear view of the optical antenna device of FIG. 1.

FIG. 3 is a diagram schematically illustrating a temperature-dependent shift in a focal length of an optical lens system in the first embodiment.

FIG. 4 is a diagram schematically illustrating an example of an overall configuration of an optical antenna device of a second embodiment according to the present invention.

FIG. 5A is a front view of the optical antenna device of FIG. 4, and FIG. 5B is a rear view of the optical antenna device of FIG. 4.

DESCRIPTION OF EMBODIMENTS

Hereinafter, various embodiments according to the present invention will be described in detail with reference to the drawings. Note that, constituent elements denoted by the same reference sign throughout the drawings have the same configuration and the same function.

First Embodiment.

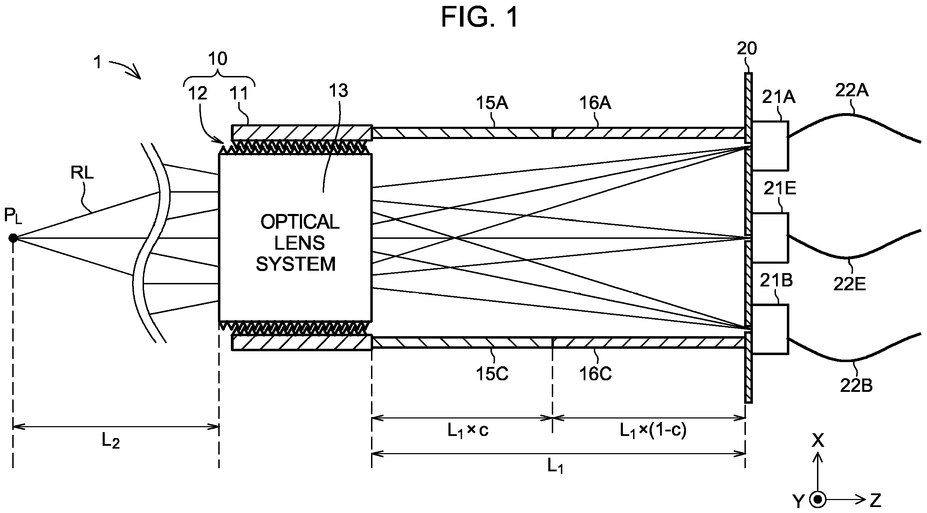

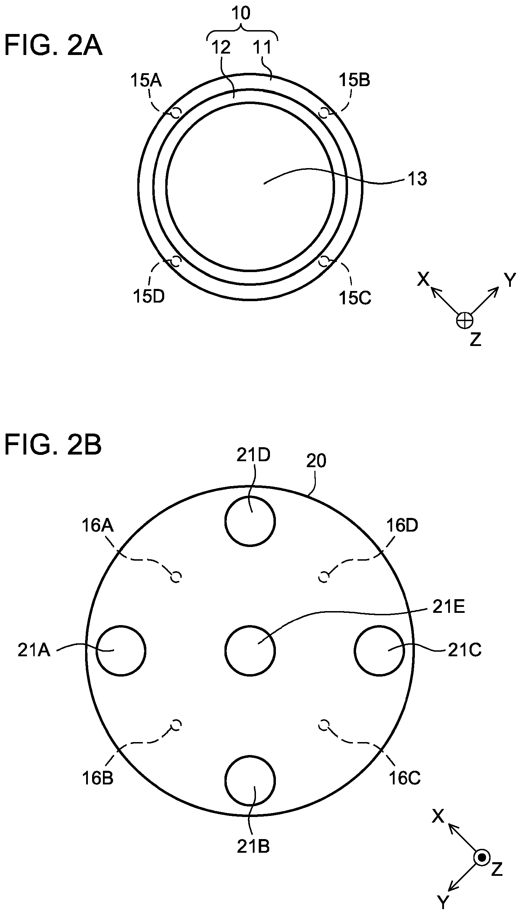

FIG. 1 is a diagram schematically illustrating an overall configuration of an optical antenna device 1 of a first embodiment according to the present invention. In addition, FIG. 2A is a front view of the optical antenna device 1 of FIG. 1 as viewed from the Z-axis negative direction, and FIG. 2B is a rear view of the optical antenna device 1 of FIG. 1 as viewed from the Z-axis positive direction. FIG. 1 schematically illustrates an end surface representing a cross-sectional structure of a main part of the optical antenna device 1. The Z-axis illustrated in FIGS. 1, 2A, and 2B is parallel to the optical axis direction of the optical antenna device 1. In addition, the X-axis and the Y-axis illustrated in FIGS. 1, 2A, and 2B are orthogonal to each other, and orthogonal to the Z-axis.

The optical antenna device 1 is incorporated for use in an active sensor using a laser beam, such as a Light Detection And Ranging (LIDAR) device. The LIDAR device is an active sensor capable of emitting a laser beam into the atmosphere, receiving scattered laser light reflected by a scattering body such as dust or fine particles floating in the atmosphere, and measuring a frequency shift or a wavelength shift due to the Doppler effect. On the basis of the measurement result, the LIDAR device can measure the moving speed and moving direction of the scattering body as a wind speed and wind direction, respectively.

As illustrated in FIGS. 1, 2A, and 2B, the optical antenna device 1 includes: an optical lens system 13 with a cylindrical shape, configured to focus a laser beam on a focusing point $P_L$ in an external space or to receive a reflected laser beam RL; a focusing-distance adjuster 10 that is an optical-system holding member configured to hold an outer peripheral edge of the optical lens system 13; an optical input/output plate 20 that is a metal optical connection member placed on the rear focal plane of the optical lens system 13; optical input/output units 21A to 21E attached to the back surface of the optical input/output plate 20; and a shaft group including first shaft portions 15A to 15D and second shaft portions 16A to 16D disposed between the focusing-distance adjuster 10 and the optical input/output plate 20.

The optical lens system 13 can include, for example, a lens array having a plurality of lenses arranged along the optical axis direction (Z-axis direction), and a lens barrel that holds an outer peripheral edge of the lens array. As illustrated in FIG. 2A, the optical lens system 13 has the circular front surface on which a laser beam is emitted or incident, and is placed inside an annular metal flange portion 11. In addition, an engagement portion 12 is formed between an outer circumferential surface of the optical lens system 13 and an inner circumferential surface of the flange portion 11.

The focusing-distance adjuster 10 of the present embodiment includes the engagement portion 12 and the flange portion 11. The engagement portion 12 includes a male thread spirally formed on the inner circumferential surface of the flange portion 11, and a female thread spirally formed on the outer circumferential surface of the optical lens system 13. The male thread and the female thread are engaged with each other. When a user rotates the optical lens system 13 around the optical axis relative to the flange portion 11, rotational motion of the optical lens system 13 is converted into translational motion in the optical axis direction. For example, the engagement portion 12 can be formed in a manner that moves the optical lens system 13 rotating in the clockwise direction to the Z-axis positive direction with respect to the flange portion 11, and that moves the optical lens system 13 rotating in the counterclockwise direction to the Z-axis negative direction with respect to the flange portion 11. In this way, the user can finely adjust a focusing distance.

As illustrated in the front view of FIG. 2A, the first shaft portions 15A to 15D are arranged at equal intervals along the circumferential direction of the flange portion 11, around the optical axis of the optical lens system 13, and one end portions (end portions on the Z-axis negative direction side) of the first shaft portions 15A to 15D are attached to the rear end portion of the flange portion 11. In addition, as illustrated in FIG. 1, the first shaft portions 15A and 15C extend from the rear end portion of the flange portion 11 toward the optical input/output plate 20 (in the Z-axis positive direction). Similarly, the first shaft portions 15B and 15D also extend from the rear end portion of the flange portion 11 toward the optical input/output plate 20 (in the Z-axis positive direction). The first shaft portions 15A to 15D are made from material with a linear expansion coefficient $\alpha$ in the optical axis direction, that is, in the Z-axis direction.

On the other hand, as illustrated in the rear view of FIG. 2B, the second shaft portions 16A to 16D are arranged at equal intervals along the circumferential direction of the circular optical input/output plate 20, and one end portions of the second shaft portions 16A to 16D are attached to the front surface (surface on the Z-axis negative direction side) of the optical input/output plate 20. In addition, as illustrated in FIG. 1, the second shaft portions 16A and 16C extend from the front surface of the optical input/output plate 20 toward the flange portion 11 (in the Z-axis negative direction). Similarly, the other second shaft portions 16B and 16D also extend from the front surface of the optical input/output plate 20 toward the flange portion 11. The second shaft portions 16A to 16D are made from material with a linear expansion coefficient $\beta$ different from the linear expansion coefficient $\alpha$ in the optical axis direction, that is, in the Z-axis direction. For example, as a combination of the constituent material of the first shaft portions 15A to 15D and the constituent material of the second shaft portions 16A to 16D, a combination of iron with a linear expansion coefficient of about $12 \times 10^{-6}$/K and aluminum with a linear expansion coefficient of about $23 \times 10^{-6}$/K, or a combination of stainless steel with a linear expansion coefficient of about $17 \times 10^{-6}$/K and aluminum with a linear expansion coefficient of about $23 \times 10^{-6}$/K can be used.

Further, at a predetermined position (shaft fixing position) between the rear end portion of the flange portion 11 and the front surface of the optical input/output plate 20, the other end portions (end portions on the Z-axis positive direction side) of the first shaft portions 15A to 15D are connected to the other end portions (portions on the Z-axis negative direction side) of the second shaft portions 16A to 16D, respectively, in a direction along the optical axis direction. For example, as illustrated in FIG. 1, the end portion of the first shaft portion 15A and the end portion of the second shaft portion 16A are connected to each other, and the end portion of the first shaft portion 15C and the end portion of the second shaft portion 16C are connected to each other. Similarly, the other end portion of the other first shaft portion 15B and the other end portion of the second shaft portion 16B are connected to each other, and the other end portion of the first shaft portion 15D and the other end portion of the second shaft portion 16D are connected to each other. A set of the first shaft portion 15A and the second shaft portion 16A, a set of the first shaft portion 15B and the second shaft portion 16B, a set of the first shaft portion 15C and the second shaft portion 16C, and a set of the first shaft portion 15D and the second shaft portion 16D have the same structure and the same size. In addition, a method of connecting the first shaft portions 15A to 15D and the second shaft portions 16A to 16D to each other is not particularly limited. For example, a male thread can be formed on the other end portion of the first shaft portion 15A and a female thread adaptable to the male thread can be formed on the other end portion of the second shaft portion 16B. The first shaft portion 15A and the second shaft portion 16B can be connected to each other by engaging the male thread of the first shaft portion 15A with the female thread of the second shaft portion 16B.

On the other hand, as illustrated in FIG. 2B, the optical input/output units 21A, 21B, ..., and 21E are provided on the back surface of the optical input/output plate 20. These optical input/output units 21A, 21B, ..., and 21E are optically connected to light propagation paths 22A, 22B, ..., and 22E, such as optical fibers. Five transmission laser beams respectively propagating through the light propagation paths 22A, 22B, ..., and 22E pass through the optical input/output units 21A to 21E and the holes of the optical input/output plate 20, and then are emitted toward the optical lens system 13. The optical lens system 13 focuses these five transmission laser beams at five points, respectively. The focusing point $P_L$ on the optical axis as illustrated in FIG. 1 is a point at which light emitted from the optical input/output unit 21E attached to the central portion of the optical input/output plate 20 is focused. As described above, the optical antenna device 1 has a configuration allowing for measurement in five lines of sight. Conversely, a reflected laser beam from the external space is focused by the optical lens system 13, and then output to the light propagation paths 22A, 22B, ..., and 22E via the optical input/output units 21A to 21E.

As illustrated in FIG. 1, the optical lens system 13 focuses a laser beam input thereto from the optical input/output plate 20 at the point $P_L$ separated by a predetermined focusing distance $L_2$. In addition, a flange back, the length in the optical axis direction between the rear end portion of the optical lens system 13 and the front surface of the optical input/output plate 20, is denoted by $L_1$. In the present embodiment, it is assumed that the total length of the set of the first shaft portion 15A and the second shaft portion 16A in the optical axis direction coincides with the flange back $L_1$. When a focal length of the optical lens system 13 is denoted by f, the following relational expression (1) is satisfied.

$$1/L_1 + 1/L_2 = 1/f. \qquad\qquad (1)$$

In this regard, the user can change the flange back $L_1$ by rotating the optical lens system 13 to translationally move the optical lens system 13 in the optical axis direction. Based on the above expression (1), the focusing distance $L_2$ can be adjusted by changing the flange back $L_1$.

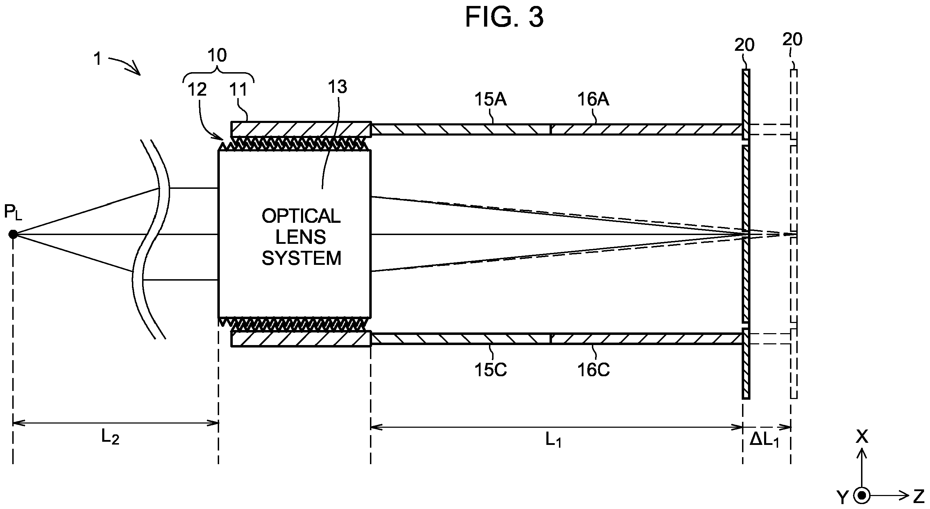

As illustrated in FIG. 3, the focal length f of the optical lens system 13 shifts depending on a temperature change $\Delta T$ in the optical lens system 13. On the other hand, it can be understood that a shift $\Delta L_1$ of the flange back $L_1$ (hereinafter

also referred to as "flange back shift $\Delta L_1$") depending on the temperature change $\Delta T$ is determined by the linear expansion coefficients $\alpha$ and $\beta$ of the first shaft portions 15A to 15D and the second shaft portions 16A to 16D, and a ratio between the length in the optical axis direction of the first shaft portions 15A to 15D and the length in the optical axis direction of the second shaft portions 16A to 16D. In the optical antenna device 1 of the present embodiment, a shift $\Delta f$ of the focal length f (hereinafter also referred to as "focal length shift $\Delta f$") depending on the temperature change $\Delta T$ cancels out the shift in the focusing distance due to the flange back shift $\Delta L_1$.

Here, a ratio of the length in the optical axis direction of the first shaft portion 15A, to the flange back $L_1$, is denoted by c, and a ratio of the length in the optical axis direction of the second shaft portion 16A, to the flange back $L_1$, is denoted by 1 - c. At this time, as illustrated in FIG. 1, the length in the optical axis direction of the first shaft portion 15A is $L_1 \times c$, and the length in the optical axis direction of the second shaft portion 16A is $L_1 \times (1 - c)$. In addition, when the linear expansion coefficient $\alpha$ of the first shaft portions 15A to 15D and the linear expansion coefficient $\beta$ of the second shaft portions 16A to 16D are given, an effective linear expansion coefficient $\gamma$ of the entire set of the first shaft portion 15A and the second shaft portion 16A is expressed by the following linear combination expression (2) .

$$\gamma = c \times \alpha + (1 - c) \times \beta. \qquad (2)$$

As described below, even when it is found that a shift in the focusing distance $L_2$ due to a temperature change remains after manufacturing of the optical lens system 13, the effective linear expansion coefficient $\gamma$ can be adjusted only by changing the ratio c between the length of the first shaft portions 15A to 15D in the optical axis direction and the length of the second shaft portions 16A to 16D in the optical axis direction. Therefore, by only replacement of the first shaft portions 15A to 15D and the second shaft portions 16A to 16D, the shift in the focusing distance due to the temperature change can be suppressed. Because the first shaft portions 15A to 15D and the second shaft portions 16A to 16D are formed as members different from the focusing-distance adjuster 10 that holds the optical lens system 13, the replacement of the first shaft portions 15A to 15D and the second shaft portions 16A to 16D is easily performed. Therefore, improvement in the temperature dependence of the optical characteristics of the optical lens system 13 can be achieved with a short time for trial production by a low cost and simple method. In addition, the flexibility of lens design can be improved. Further, in the present method, the dimensions of the first shaft portions 15A to 15D and the second shaft portions 16A to 16D after the replacement are not substantially changed, and also the outer shape of the optical antenna device 1 are not substantially changed. Therefore, it is possible to avoid the influence of the present method on an active sensor which includes the optical antenna device 1.

Here, the flange back shift $\Delta L_1$ corresponding to the temperature change amount $\Delta T$ is expressed by an expression (3) below.

$$\Delta L_1 = L_1 \times \gamma \times \Delta T. \qquad (3)$$

Thermal expansion and change of a refractive index of the lens array occur due to the temperature change $\Delta T$ in the optical lens system 13, whereby the focal length f shifts. In the present embodiment, with respect to the focal length shift $\Delta f$, by athermal design, the focal length f shifts to cause the focusing distance $L_2$ to be constant, depending on the shift in the flange back $L_1$ at the time of temperature change in the expression (1). When the effective linear expansion coefficient $\gamma$ is used, the following expression (4) is approximately satisfied.

$$\Delta f = L_1 \times \gamma \times \Delta T. \qquad (4)$$

Therefore, when we assume that the effective linear expansion coefficient is denoted by $\gamma_p$ in a case where the focal length shift becomes equal to $\Delta f_p$ in response to the temperature change amount $\Delta T$ caused by variation in the optical characteristics due to factors such as manufacturing tolerance of the optical lens system 13, the following expression (5) is approximately satisfied.

$$\Delta f_p = L_1 \times \gamma_p \times \Delta T. \qquad (5)$$

In addition, when we assume that $c_p$ denotes the ratio of the length of first shaft portions to be substituted for the first shaft portions 15A to 15D by the replacement of the first shaft portions 15A to 15D and the second shaft portions 16A to 16D, similarly to the expression (2), the following expression (6) is satisfied.

$$\gamma_p = c_p \times \alpha + (1 - c_p) \times \beta. \qquad (6)$$

When we assume that $\delta c$ denotes a change amount of the ratio c generated by the replacement of the first shaft portions 15A to 15D and the second shaft portions 16A to 16D, the following expression (7) is derived from the expressions (2) and (6).

$$\delta c = c_p - c = (\gamma_p - \gamma)/(\alpha - \beta). \qquad (7)$$

By substituting $\gamma_p$ (= $\Delta f_p/(L_1 \times \Delta T)$) in the expression (5) into the expression (7) and rearranging the resulting expression, the change amount $\delta c$ can be obtained. Therefore, by using the change amount $\delta c$, the following expression (8) is derived.

$$c_p = c + \delta c$$
$$= c + \{1/[L_1 \times (\alpha - \beta)]\} \times (\Delta f_p/\Delta T - L_1 \times \gamma). \qquad (8)$$

Further, as an athermalization condition of the optical lens system 13, the following inequality expression (9) is preferably satisfied where the focal length shift $\Delta f$ and the length $L_1$ are measured in millimeters.

$$\left| \Delta f/\Delta T - L_1 \times \gamma \right| < 0.001. \qquad (9)$$

By satisfying the conditional expression (9), the difference between the focal length shift $\Delta f$ and the flange back shift can be suppressed, so that an optical antenna configuration can be obtained in which focusing distance change due to the temperature change is suppressed.

As described above, in the optical antenna device 1 of the first embodiment, even when it is found that the shift in the focusing distance $L_2$ due to the temperature change remains after manufacturing of the optical lens system 13, improvement in the temperature dependence of the optical characteristics of the optical lens system 13 can be achieved with a short time for trial production and without change of the outer shape of the optical antenna device 1, by a simple and low cost method of replacing the first shaft portions 15A to 15D and the second shaft portions 16A to 16D. Specifically, by adjusting the ratios c and 1 - c of the lengths of the first shaft portions 15A to 15D and second shaft portions 16A to 16D, the effective linear expansion coefficient $\gamma$ is adjusted to compensate for a shift in the focusing distance due to the temperature change. In addition, because only the adjustment of the effective linear expansion coefficient $\gamma$ is required, the flexibility in the design of the optical lens system 13 is improved. Because the first shaft portions 15A to 15D and the second shaft portions 16A to 16D are formed as members different from the focusing-distance adjuster 10 that holds the optical lens system 13, replacement of the first shaft portions 15A to 15D and the second shaft portions 16A to 16D is easily performed. Further, because only the adjustment of the ratios c and 1 - c is needed, the outside dimension of the optical antenna device 1 is not changed by the replacement. Therefore, there is an advantageous effect where the influence on the active sensor including the optical antenna device 1 is small.

Note that, in the present embodiment, the optical input/output units 21A to 21E are attached at a total of five places, in order to measure about five lines of sight. Instead, the optical input/output unit may be attached at only one place depending on the application, or the optical input/output unit may be attached at six or more places. In addition, attachment positions of the optical input/output units are not limited to the positions illustrated in FIG. 2B.

In addition, in the present embodiment, in order to physically connect the flange portion 11 and the optical input/output plate 20 to each other, four first shaft portions 15A to 15D and four second shaft portions 16A to 16D are used, although the number of shaft portions is not limited to four. More than four shaft portions may be adopted for improvement of rigidity, or Less than four shaft portions may be adopted for cost reduction.

Further, instead of the first shaft portions 15A to 15D and the second shaft portions 16A to 16D, a set of cylindrical shaft portions having an optical path inside may be adopted for improvement of the rigidity.

In addition, a helicoid may be used instead of the focusing-distance adjuster 10 having the engagement portion 12 described above. When the helicoid is used, the optical lens system 13 itself can translate without rotating.

Second Embodiment.

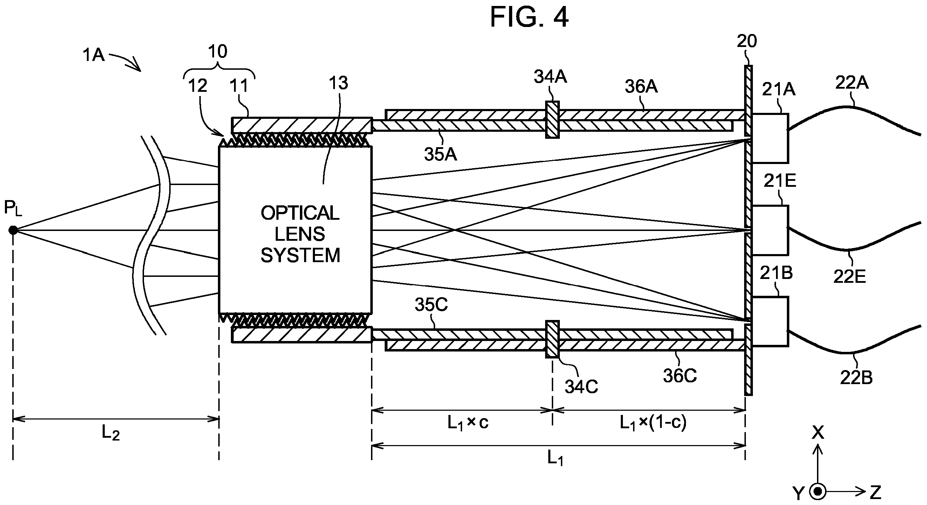

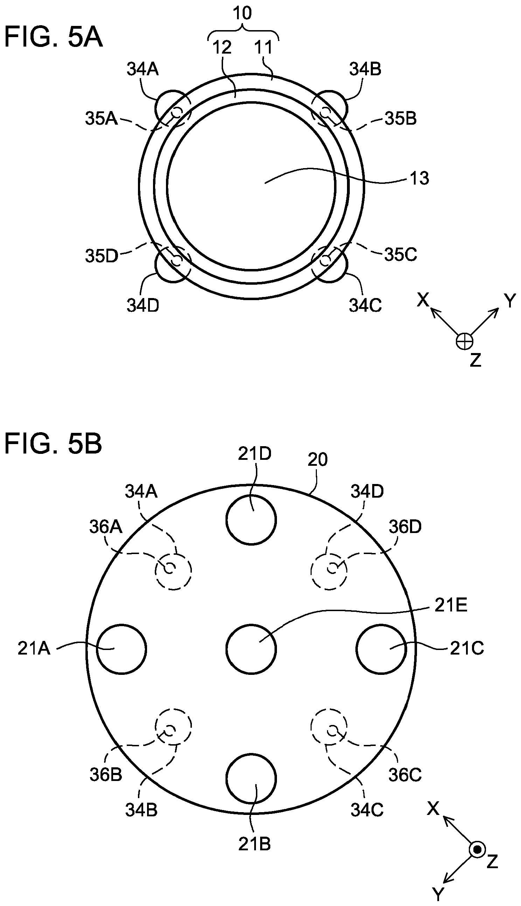

Next, a second embodiment will be described which is a modification of the first embodiment. FIG. 4 is a schematic configuration diagram of an optical antenna device 1A of the second embodiment according to the present invention. In addition, FIG. 5A is a front view of the optical antenna device 1A as viewed from the Z-axis negative direction, and FIG. 5B is a rear view of the optical antenna device 1A as viewed from the Z-axis positive direction. FIG. 4 schematically illustrates an end surface representing a cross-sectional structure of a main part of the optical antenna device 1A. The Z-axis illustrated in FIGS. 4, 5A, and 5B is parallel to the optical axis direction of the optical antenna device 1A. In addition, the X-axis and the Y-axis illustrated in FIGS. 4, 5A, and 5B are orthogonal to each other, and orthogonal to the Z-axis.

As illustrated in FIGS. 4, 5A, and 5B, the optical antenna device 1A includes the optical lens system 13, the focusing-distance adjuster 10, the optical input/output plate 20, fixing members 34A to 34D, first shaft portions 35A to 35D, and second shaft portions 36A to 36D. The configuration of the optical antenna device 1A of the present embodiment is the same as the configuration of the optical antenna device 1 of the first embodiment except that the fixing members 34A to 34D, the first shaft portions 35A to 35D, and the second shaft portions 36A to 36D are provided instead of the first shaft portions 15A to 15D and the second shaft portions 16A to 16D of FIG. 1.

In the present embodiment, as illustrated in the front view of FIG. 5A, the first shaft portions 35A to 35D are arranged at equal intervals along the circumferential direction of the flange portion 11 around the optical axis of the optical lens system 13, and one end portions (end portions on the Z-axis negative direction side) of the first shaft portions 35A to 35D are attached to the rear end portion of the flange portion 11. In addition, as illustrated in FIG. 4, the first shaft portions 35A and 35C extend from the rear end portion of the flange portion 11 toward the optical input/output plate 20 (in the Z-axis positive direction). Similarly, the other first shaft portions 35B and 35D also extend from the rear end portion of the flange portion 11 toward the optical input/output plate 20. The first shaft portions 35A to 35D are made from material with the linear expansion coefficient $\alpha$ in the optical axis direction, that is, in the Z-axis direction. The constituent material of the first shaft portions 35A to 35D is the same as the constituent material of the first shaft portions 15A to 15D of the first embodiment.

On the other hand, as illustrated in the rear view of FIG. 5B, the second shaft portions 36A to 36D are arranged at equal intervals along the circumferential direction of the circular optical input/output plate 20, and one end portions (end portions on the Z-axis positive direction side) of the second shaft portions 36A to 36D are attached to the front surface of the optical input/output plate 20. In addition, as illustrated in FIG. 4, the second shaft portions 36A and 36C extend from the front surface of the optical input/output plate 20 toward the flange portion 11 (in the Z-axis negative direction). Similarly, the other second shaft portions 36B and 36D also extend from the front surface of the optical input/output plate 20 toward the flange portion 11. The second shaft portions 36A to 36D are made from material with the linear expansion coefficient $\beta$ different from the linear expansion coefficient $\alpha$ in the optical axis direction, that is, in the Z-axis direction. The constituent material of the second shaft portions 36A to 36D is the same as the constituent material of the second shaft portions 16A to 16D of the first embodiment.

The first shaft portions 35A to 35D and the second shaft portions 36A to 36D extend with displacements therebetween in the radial direction perpendicular to the optical axis direction. In addition, as illustrated in FIG. 4, at a predetermined position (shaft fixing position) between the rear end portion of the flange portion 11 and the front surface of the optical input/output plate 20, the first shaft portion 35A and the second shaft portion 36A are fixed to each other in the radial direction by the fixing member 34A and are overlapped with each other, and the first shaft portion 35C and the second shaft portion 36C are fixed to each other in the radial direction by the fixing member 34C and are overlapped with each other. Similarly, the other first shaft portion 35B and the second shaft portion 36B are fixed to each other in the radial direction by the fixing member 34B and are overlapped with each other, and the first shaft portion 35D and the second shaft portion 36D are fixed to each other in the radial direction by the fixing member 34D and are overlapped with each other. A set of the first shaft portion 35A and the second shaft portion 36A, a set of the first shaft portion 35B and the second shaft portion 36B, a set of the first shaft portion 35C and the second shaft portion 36C, and a set of the first shaft portion 35D and the second shaft portion 36D have the same structure and the same size.

In the present embodiment, a ratio of the length of the first shaft portion from the connection end portion of the first shaft portion 35A to the shaft fixing position, to the flange back $L_1$, is denoted by c, and a ratio of the length of the second shaft portion from the connection end portion of the second shaft portion 36A to the shaft fixing position, to the flange back $L_1$, is denoted by 1 - c. The effective linear expansion coefficient $\gamma$ then is represented by the following linear combination expression (2A), similar to the expression (2).

$$\gamma = c \times \alpha + (1 - c) \times \beta. \qquad (2A)$$

In addition, also in the present embodiment, the expression (8) can be derived. In addition, also in the present embodiment, the condition of the expression (9) is preferably satisfied.

As described above, also in the second embodiment, effects can be obtained similar to those of the first embodiment. Specifically, even when it is found that the shift in the focusing distance $L_2$ due to the temperature change remains after manufacturing of the optical lens system 13, improvement in the temperature dependence of the optical characteristics of the optical lens system 13 can be achieved with a short time for trial production without change of the outer shape of the optical antenna device 1A, by a simple and low cost method of replacing the fixing members 34A to 34D, the first shaft portions 35A to 35D, and the second shaft portions 36A to 36D, or of changing positions of the fixing members 34A to 34D. In particular, in the present embodiment, because the effective linear expansion coefficient $\gamma$ can be changed only by changing the positions of the fixing members 34A to 34D in the optical axis direction, there is an advantage where it is not necessary to replace the first shaft portions 35A to 35D and the second shaft portions 36A to 36D.

Note that, the length of the first shaft portions 35A to 35D and the length of the second shaft portions 36A to 36D are desirably set as long as possible. The reason is that a movable range of the fixing members 34A to 34D can be widely set by setting the region long in which the first shaft portions 35A to 35D and the second shaft portions 36A to 36D are arranged to be overlapped with each other, whereby an adjustment range of the effective linear expansion coefficient $\gamma$ can be expanded.

In this regard, the length of the first shaft portions 35A to 35D and the length of the second shaft portions 36A to 36D are required to be shorter than the flange back $L_1$. The reason is, for example, to prevent the end portions of the first shaft portions 35A to 35D from colliding with the optical input/output plate 20. It is also necessary that the end portions of the second shaft portions 36A to 36D do not collide with the flange portion 11. In addition, it is necessary to set a margin of the length of the first shaft portions 35A to 35D so that collision with the optical input/output plate 20 does not occur when the first shaft portions 35A to 35D thermally expand. It is also necessary to set a margin of the length of the second shaft portions 36A to 36D so that collision with the flange portion 11 does not occur when the second shaft portions 36A to 36D thermally expand.

Although the various embodiments according to the present invention have been described with reference to the drawings, these embodiments are examples of the present invention, and various forms other than these embodiments can be adopted.

Note that, within the scope of the present invention, an arbitrary combination of the first and second embodiments, a modification of an arbitrary component of each embodiment, or omission of an arbitrary component in each embodiment is possible.

INDUSTRIAL APPLICABILITY

Because an optical antenna device in accordance with the present invention has a function to transmit and/or receive a laser beam, the optical antenna device is suitable for use in active sensors using laser beams, such as LIDAR devices.

REFERENCE SIGNS LIST

1, 1A: Optical antenna devices; 10: Focusing-distance adjuster; 11: Flange portion; 12: Engagement portion; 13: optical lens system; 15A to 15D: First shaft portions; 16A to 16D: Second shaft portions; 20: Optical input/output plate; 21A to 21E: Optical input/output units; 22A to 22E: Light propagation paths; 34A to 34D: Fixing members; 35A to 35D: First shaft portions; 36A to 36D: Second shaft portions; and $P_L$: Focusing point.

**Claims**

1.  An optical antenna device (1; 1A) comprising:

    an optical lens system (13) configured to focus a laser beam incident thereon;
    an optical-system holding member (10) including a flange portion (11) configured to hold an outer peripheral edge of the optical lens system (13), and an engagement portion (12) formed between an outer circumferential surface of the optical lens system (13) and an inner circumferential surface of the flange portion (11);
    an optical connection member (20) placed on a rear focal plane of the optical lens system (13);
    a first shaft portion (15A to 15D; 35A to 35D) extending along an optical axis direction of the optical lens system (13) from a rear end portion of the flange portion (11) toward the optical connection member (20), and having a first linear expansion coefficient in the optical axis direction; and
    a second shaft portion (16A to 16D; 36A to 36D) extending along the optical axis direction from a front surface of the optical connection member (20) toward the flange portion (11) of the optical-system holding member (10), and having a second linear expansion coefficient different from the first linear expansion coefficient in the optical axis direction,

**characterized in that**:

the first shaft portion (15A to 15D; 35A to 35D) and the second shaft portion (16A to 16D; 36A to 36D) are fixedly connected to each other at a predetermined fixing position between the rear end portion of the flange portion (11) and the front surface of the optical connection member (20), and
an effective linear expansion coefficient of the first and second shaft portions (15A to 15D, 16A to 16D; 35A to 35D, 36A to 36D) as a whole is expressed by a linear combination expression given by

$$\gamma = c \times \alpha + (1 - c) \times \beta,$$

where c denotes a ratio of a length of the first shaft portion (15A to 15D; 35A to 35D) from the rear end portion of the flange portion (11) to the fixing position, to a flange back between the optical-system holding member (10) and the optical connection member (20), 1 - c denotes a ratio of a length of the second shaft portion (16A to 16D; 36A to 36D) from the front surface of the optical connection member (20) to the fixing position, to the flange back, $\alpha$ denotes the first linear expansion coefficient, $\beta$ denotes the second linear expansion coefficient, and $\gamma$ denotes the effective linear expansion coefficient.

2. The optical antenna device (1) according to claim 1, wherein:

a first end portion of the first shaft portion (15A to 15D) in the optical axis direction is connected to the rear end portion of the flange portion (11),
a first end portion of the second shaft portion (16A to 16D) in the optical axis direction is connected to the front surface of the optical connection member (20), and
a second end portion of the first shaft portion (15A to 15D) in the optical axis direction and a second end portion of the second shaft portion (16A to 16D) in the optical axis direction are connected to each other at the fixing position.

3. The optical antenna device (1A) according to claim 1, further comprising a fixing member (34A to 34D) to fixedly connect the first shaft portion (35A to 35D) and the second shaft portion (36A to 36D) to each other at the fixing position, wherein

a first end portion of the first shaft portion (35A to 35D) in the optical axis direction is connected to the rear end portion of the flange portion (11),
a first end portion of the second shaft portion (36A to 36D) in the optical axis direction is connected to the front surface of the optical connection member (20), and
the first shaft portion (35A to 35D) and the second shaft portion (36A to 36D) extend along the optical axis direction with a displacement therebetween in a vertical direction to the optical axis direction, and are overlapped with each other in the vertical direction at the fixing position.

4. The optical antenna device (1; 1A) according to claim 1, wherein the optical lens system (13) is configured to satisfy a condition expression given by:

$$|\Delta f/\Delta T - L_1 \times \gamma| < 0.001,$$

where $\Delta T$ denotes an amount of temperature change, $\Delta f$ denotes a shift in millimeters of a focal length of the optical lens system (13) due to the amount $\Delta T$ of temperature change, and $L_1$ denotes a distance in the optical axis direction between the optical lens system (13) and the optical connection member (20) .

**Patentansprüche**

1. Optische Antennenvorrichtung (1; 1A), umfassend:

ein optisches Linsensystem (13), welches dazu eingerichtet ist, einen daran einfallenden Laserstrahl zu fokussieren;
ein Optiksystem-Halteelement (10), welches einen Flanschabschnitt (11) umfasst, welcher dazu eingerichtet ist, einen äußeren Umfangsrand des optischen Linsensystems (13) zu halten, sowie einen Eingriffsabschnitt (12), welcher zwischen einer äußeren Umfangsfläche des optischen Linsensystems (13) und einer inneren Umfangsfläche des Flanschabschnitts (11) gebildet ist;

ein optisches Verbindungselement (20), welches an einer hinteren Fokusebene des optischen Linsensystems (13) platziert ist;

einen ersten Schaftabschnitt (15A bis 15D; 35A bis 35D), welcher sich entlang einer optischen Achsenrichtung des optischen Linsensystems (13) von einem hinteren Endabschnitt des Flanschabschnitts (11) in Richtung des optischen Verbindungselements (20) erstreckt und einen ersten linearen Ausdehnungskoeffizienten in der optischen Achsenrichtung aufweist; und

einen zweiten Schaftabschnitt (16A bis 16D; 36A bis 36D), welcher sich entlang der optischen Achsenrichtung von einer vorderen Fläche des optischen Verbindungselements (20) in Richtung des Flanschabschnitts (11) des Optiksystem-Halteelements (10) erstreckt und einen zweiten linearen Ausdehnungskoeffizienten aufweist, welcher verschieden von dem ersten linearen Ausdehnungskoeffizienten in der optischen Achsenrichtung ist, **dadurch gekennzeichnet, dass**:

der erste Schaftabschnitt (15A bis 15D; 35A bis 35D) und der zweite Schaftabschnitt (16A bis 16D; 36A bis 36D) an einer vorbestimmten Befestigungsposition zwischen dem hinteren Endabschnitt des Flanschabschnitts (11) und der vorderen Fläche des optischen Verbindungselements (20) fest miteinander verbunden sind, und

ein effektiver linearer Ausdehnungskoeffizient der ersten und zweiten Schaftabschnitte (15A bis 15D, 16A bis 16D; 35A bis 35D, 36A bis 36D) als ein Ganzes durch einen linearen Kombinationsausdruck ausgedrückt wird, welcher gegeben ist durch:

$$\gamma = c \times \alpha + (1 - c) \times \beta,$$

wobei c ein Verhältnis einer Länge des ersten Schaftabschnitts (15A bis 15D; 35A bis 35D) von dem hinteren Endabschnitt des Flanschabschnitts (11) zu der Befestigungsposition, zu einer Flanschrückseite zwischen dem Optiksystem-Halteelement (10) und dem optischen Verbindungselement (20) bezeichnet, 1 - c ein Verhältnis einer Länge des zweiten Schaftabschnitts (16A bis 16D; 36A bis 36D) von der vorderen Fläche des optischen Verbindungselements (20) zu der Befestigungsposition zu der Flanschrückseite bezeichnet, $\alpha$ den ersten linearen Ausdehnungskoeffizienten bezeichnet, $\beta$ den zweiten linearen Ausdehnungskoeffizienten bezeichnet und $\gamma$ den effektiven Ausdehnungskoeffizienten bezeichnet.

2. Optische Antennenvorrichtung (1) nach Anspruch 1, wobei:

ein erster Endabschnitt des ersten Schaftabschnitts (15A bis 15D) in der optischen Achsenrichtung mit dem hinteren Endabschnitt des Flanschabschnitts (11) verbunden ist,

ein erster Endabschnitt des zweiten Schaftabschnitts (16A bis 16D) in der optischen Achsenrichtung mit der vorderen Fläche des optischen Verbindungselements (20) verbunden ist, und

ein zweiter Endabschnitt des ersten Schaftabschnitts (15A bis 15D) in der optischen Achsenrichtung und ein zweiter Endabschnitt des zweiten Schaftabschnitts (16A bis 16D) in der optischen Achsenrichtung miteinander an der Befestigungsposition verbunden sind.

3. Optische Antennenvorrichtung (1A) nach Anspruch 1, ferner umfassend ein Befestigungselement (34A bis 34D) für ein festen Verbinden des ersten Schaftabschnitts (35A bis 35D) und des zweiten Schaftabschnitts (36A bis 36D) miteinander an der Befestigungsposition, wobei

ein erster Endabschnitt des ersten Schaftabschnitts (35A bis 35D) in der optischen Achsenrichtung mit dem hinteren Endabschnitt des Flanschabschnitts (11) verbunden ist,

ein erster Endabschnitt des zweiten Schaftabschnitts (36A bis 36D) in der optischen Achsenrichtung mit der vorderen Fläche des optischen Verbindungselements (20) verbunden ist, und

sich der erste Schaftabschnitt (35A bis 35D) und der zweite Schaftabschnitt (36A bis 36D) entlang der optischen Achsenrichtung mit einem Versatz dazwischen in einer vertikalen Richtung zu der optischen Achsenrichtung erstrecken und miteinander in der vertikalen Richtung an der Befestigungsposition überlappend sind.

4. Optische Antennenvorrichtung (1; 1A) nach Anspruch 1, wobei das optische Linsensystem (13) dazu eingerichtet ist, einen Bedingungsausdruck zu erfüllen, welcher gegeben ist durch:

$$|\Delta f/\Delta T - L_1 \times \gamma| < 0,001,$$

wobei ΔT eine Menge einer Temperaturänderung bezeichnet, Δf eine Verschiebung in Millimetern einer Fokuslänge des optischen Linsensystems (13) aufgrund der Menge ΔT der Temperaturänderung bezeichnet und $L_1$ einen Abstand in der optischen Achsenrichtung zwischen dem optischen Linsensystem (13) und dem optischen Verbindungselement (20) bezeichnet.

**Revendications**

1. Dispositif formant antenne optique (1 ; 1A) comprenant :

   un système de lentille optique (13) configuré pour focaliser un faisceau laser incident sur celui-ci ;
   un élément de maintien de système optique (10) incluant une partie de bride (11) configurée pour maintenir un bord périphérique extérieur du système de lentille optique (13), et une partie de mise en prise (12) formée entre une surface circonférentielle extérieure du système de lentille optique (13) et une surface circonférentielle intérieure de la partie de bride (11) ;
   un élément de connexion optique (20) placé sur un plan focal arrière du système de lentille optique (13) ;
   une première partie d'arbre (15A à 15D ; 35A à 35D) s'étendant dans une direction d'axe optique du système de lentille optique (13) depuis une partie d'extrémité arrière de la partie de bride (11) vers l'élément de connexion optique (20), et présentant un premier coefficient d'expansion linéaire dans la direction d'axe optique ; et
   une seconde partie d'arbre (16A à 16D ; 36A à 36D) s'étendant dans la direction d'axe optique depuis une surface avant de l'élément de connexion optique (20) vers la partie de bride (11) de l'élément de maintien de système optique (10), et présentant un second coefficient d'expansion linéaire différent du premier coefficient d'expansion linéaire dans la direction d'axe optique,
   **caractérisé en ce que** :

   la première partie d'arbre (15A à 15D ; 35A à 35D) et la seconde partie d'arbre (16A à 16D; 36A à 36D) sont connectées fixement l'une à l'autre à une position de fixation prédéterminée entre la partie d'extrémité arrière de la partie de bride (11) et la surface avant de l'élément de connexion optique (20), et
   un coefficient d'expansion linéaire efficace des première et seconde parties d'arbre (15A à 15D, 16A à 16D ; 35A à 35D, 36A à 36D) dans leur ensemble est exprimé par une expression de combinaison linéaire donnée par

$$\Upsilon = c \times \alpha + (1 - c) \times \beta,$$

   où c représente un rapport d'une longueur de la première partie d'arbre (15A à 15D ; 35A à 35D) depuis la partie d'extrémité arrière de la partie de bride (11) jusqu'à la position de fixation, sur un retour de bride entre l'élément de maintien de système optique (10) et l'élément de connexion optique (20), 1 - c représente un rapport d'une longueur de la seconde partie d'arbre (16A à 16D; 36A à 36D) depuis la surface avant de l'élément de connexion optique (20) jusqu'à la position de fixation, sur le retour de bride, α représente le premier coefficient d'expansion linéaire, β représente le second coefficient d'expansion linéaire, et Υ représente le coefficient d'expansion linéaire efficace.

2. Dispositif formant antenne optique (1) selon la revendication 1, dans lequel :

   une première partie d'extrémité de la première partie d'arbre (15A à 15D) dans la direction d'axe optique est connectée à la partie d'extrémité arrière de la partie de bride (11),
   une première partie d'extrémité de la seconde partie d'arbre (16A à 16D) dans la direction d'axe optique est connectée à la surface avant de l'élément de connexion optique (20), et
   une seconde partie d'extrémité de la première partie d'arbre (15A à 15D) dans la direction d'axe optique et une seconde partie d'extrémité de la seconde partie d'arbre (16A à 16D) dans la direction d'axe optique sont connectées l'une à l'autre à la position de fixation.

3. Dispositif formant antenne optique (1A) selon la revendication 1, comprenant en outre un élément de fixation (34A à 34D) pour connecter fixement la première partie d'arbre (35A à 35D) et la seconde partie d'arbre (36A à 36D) l'une à l'autre à la position de fixation, dans lequel

une première partie d'extrémité de la première partie d'arbre (35A à 35D) dans la direction d'axe optique est connectée à la partie d'extrémité arrière de la partie de bride (11),
une première partie d'extrémité de la seconde partie d'arbre (36A à 36D) dans la direction d'axe optique est connectée à la surface avant de l'élément de connexion optique (20), et
la première partie d'arbre (35A à 35D) et la seconde partie d'arbre (36A à 36D) s'étendent dans la direction d'axe optique avec un déplacement entre elles dans une direction verticale par rapport à la direction d'axe optique, et se chevauchent dans la direction verticale à la position de fixation.

4.  Dispositif formant antenne optique (1 ; 1A) selon la revendication 1, dans lequel le système de lentille optique (13) est configuré pour satisfaire une expression de condition donnée par :

$$|\Delta f/\Delta T - L_1 \times Y| < 0,001,$$

où $\Delta T$ représente une quantité de changement de température, $\Delta f$ représente un déplacement en millimètres d'une longueur focale du système de lentille optique (13) sous l'effet de la quantité $\Delta T$ de changement de température, et $L_i$ représente une distance dans la direction d'axe optique entre le système de lentille optique (13) et l'élément de connexion optique (20).

FIG. 1

FIG. 2A

FIG. 2B

# FIG. 3

# FIG. 4

EP 3 460 553 B1

FIG. 5A

FIG. 5B

**EP 3 460 553 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8313774 A
- WO 2012013491 A1
- US 2010165492 A1
- WO 9935526 A1
- US 2002114593 A1